# EUROPÄISCHE PATENTSCHRIFT

(11) **EP 0 351 648 B1**
(45) Veröffentlichungstag und Bekanntmachung des Hinweises auf die Patenterteilung: **13.04.1994**
(21) Anmeldenummer: 89112305.1
(22) Anmeldetag: 06.07.1989
(51) Int. Cl.: C08K 5/521, C08L 69/00, C08K 5/523

(54) **Thermoplastische Polycarbonatformmassen mit flammwidrigen Eigenschaften**
Thermoplastic polycarbonate moulding compositions with flame retarding properties
Compositions de moulage thermoplastiques ayant des propriétés de résistance à la flamme

(30) Priorität: 19.07.1988 DE 3824356
(43) Veröffentlichungstag der Anmeldung: 24.01.1990
(73) Patentinhaber: BAYER AG, 51368 Leverkusen (DE)
(72) Erfinder: Fuhr, Karl, Dr., D-4150 Krefeld 1 (DE); Müller, Friedemann, Dr., D-4040 Neuss 21 (DE); Ott, Karl-Heinz, Dr., D-5090 Leverkusen 1 (DE); Block, Hans-Dieter, Dr., D-5090 Leverkusen 3 (DE); Urbanneck, Bernd, D-4050 Mönchengladbach 2 (DE); Ballas, Werner, D-4047 Dormagen 11 (DE)

(56) Entgegenhaltungen:
- EP-A- 0 174 493
- EP-A- 0 261 382
- DE-A- 2 013 505
- PATENT ABSTRACTS OF JAPAN Band 12, Nr. 186 (C-500)(3033), 31. Mai 1988; & JP-A-62292850
- CHEMICAL ABSTRACTS Band 96, Nr. 22, 31 Mai 1982,Seite 38, Zusammenfassung Nr. 182107c, Columbus, Ohio, US; R.W. STACKMAN et al.: "Phosphorus based additives for flame retardant polyester. 1. Low molecularweight additives" & Ind. Eng.Chem. Prod. Res. Dev. 1982, Band 21, Nr. 2, Seiten 328-331
- PATENT ABSTRACTS OF JAPAN Band 11, Nr. 24 (C-399)(2471), 23 Januar 1987; & JP-A-61197653

## Beschreibung

Gegenstand der vorliegenden Erfindung sind thermoplastische Formmassen enthaltend
A) 40 bis 90 Gewichtsteile, vorzugsweise 50-70 Gewichtsteile, eines thermoplastischen aromatischen Polycarbonats,
B) 10-50 Gewichtsteile, vorzugsweise 15-35 Gewichtsteile eines thermoplastischen Copolymerisats aus 50-95 Gew.-% Styrol, α-Methylstyrol, kernalkyliertem Styrol, Halogenstyrol oder Mischungen daraus und 5-50 Gew.-% Acrylnitril, Methacrylnitril, Alkylacrylat, Alkylmethacrylat, Maleinsäureanhydrid, N-substituiertem Maleinimid, Vinylacetat oder Mischungen daraus,
C) 0-25 Gewichtsteile, vorzugsweise 0-20 Gewichtsteile Pfropfpolymerisat hergestellt aus
   C.1) 5-90 Gewichtsteilen, vorzugsweise 30-80 Gewichtsteilen, einer Mischung aus:
   C.1.1) 50-95 Gew.-% Styrol, α-Methylstyrol, Halogenstyrol, kernalkyliertem Styrol, Methylmethacrylat oder Mischungen daraus, und
   C.1.2) 5-50 Gew.-% (Meth)Acrylnitril, Methylmethacrylat, Maleinsäureanhydrid, N-substituiertem Maleinimid oder Mischungen daraus, auf
   C.2) 10-95 Gewichtsteilen, vorzugsweise 20-70 Gewichtsteilen eines Kautschuks mit einer Glastemperatur T_{G} ≦ 10°C, aus beispielsweise Polybutadien-, Alkylacrylat-, EPDM-(Ethylen-Propylen-Dien-Monomer)-oder Silikon-Kautschuken,
D) 1 bis 25 Gew.-Teile, vorzugsweise 2 bis 20 Gew.-Teile, bezogen jeweils auf 100 Gew.-Teile Gesamtgewicht aus A)+B) und gegebenenfalls C), einer Phosphorverbindung,
E) 0,05 bis 5,0 Gew.-Teile, vorzugsweise 0,1 bis 1,0 Gew.-Teile, bezogen auf 100 Gew.-Teile A)+B) und gegebenenfalls C), eines Tetrafluorethylenpolymerisats mit mittleren Teilchengrößen von 0,05 bis 20 µm und einer Dichte von 1,2 bis 1,9 g/cm³, wobei vorzugsweise eine koagulierte Mischung von Emulsionen der Tetrafluorethylenpolymerisate E) mit Emulsionen von Pfropfpolymerisaten C) eingesetzt wird, worin das Gewichtsverhältnis Pfropfpolymerisat C) zum Tetrafluorethylenpolymerisat E) zwischen 95:5 und 60:40 liegt und der Gehalt an Cofällung von C) und E) bezogen auf 100 Gewichtsteile A), B) und gegebenenfalls C) zwischen 0,1 und 20,0 Gewichtsteilen liegt,
   die dadurch gekennzeichnet sind, daß sie als Phosphorverbindungen D) solche der Formel (I) enthalten, 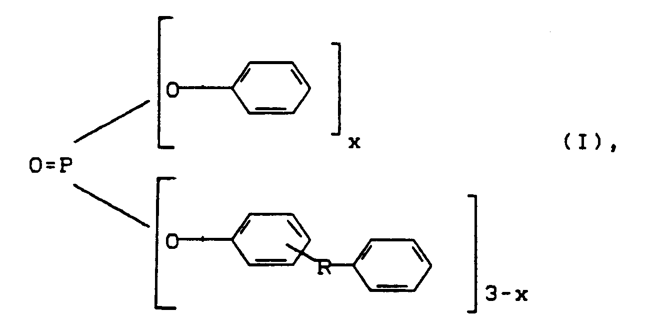 worin R eine -CH₂-, 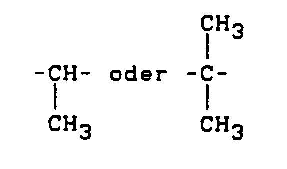 Gruppe ist,
   - x: 0, 1 oder 2 ist und die aromatischen Bereiche auch Alkyl substituiert sein können.

Polycarbonatformmassen, die Phosphatester der Formel (II) enthalten, 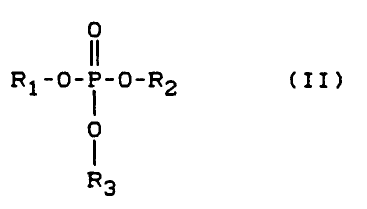
worin
R₁, R₂ und R₃ gleich oder verschieden und C₁-C₂₀-Kohlenwasserstoffreste sind, wobei mindestens zwei der Reste R₁, R₂ und R₃ substituierte oder unsubstituierte Arylreste darstellen, sind bekannt. (Siehe DE-OS 3 429 481 (Le A 23 063) und DE-OS 3 430 234 (Le A 22 925). Die Verbindungen der Formel (I) kommen darin jedoch nicht vor.

Poylcarbonatformmassen, die Phosphorverbindungen der Formel (III) enthalten 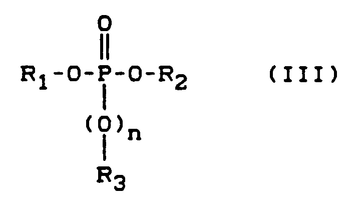
worin
R₁, R₂ und R₃ unabhängig voneinander ein gegebenenfalls halogeniertes C₁-C₈-Alkyl oder ein gegebenenfalls halogeniertes C₆-C₂₀-Aryl und "n" 0 oder 1 ist, sind ebenfalls bekannt.
(Siehe EP-OS 0 174 493 (Le A 23 043-EP), DE-OS 3 444 869 (Le A 23 527), DE-OS 3 444 868 (Le A 23 502), DE-OS 3 516 807 (Le A 23 790), DE-OS 3 521 888 (Le A 23 877), DE-OS 3 523 316 (Le A 23 927), DE-OS 3 523 314 (Le A 23 940), DE-OS 3 545 609 (Le A 24 039), DE-OS 3 615 768 (Le A 24 500), DE-OS 3 617 511 (Le A 24 501), DE-OS 3 628 904 (Le A 24 683) und DE-OS 3 629 546 (Le A 24 695)).
Die Verbindungen der Formel (I) sind darin wiederum nicht genannt.

Nachteilig bei diesen Formmassen mit einem Gehalt an Phosphaten der Formeln (II) und (III) ist vorwiegend, daß die in diesen Literaturstellen beschriebenen Phosphorsäureester unter Herstell- und Verarbeitungsbedingungen teilweise flüchtig sind. Eine Molekulargewichtserhöhung der Phosphate durch Verlängerung der Alkylketten an Aromaten reduziert im allgemeinen kaum die Flüchtigkeit, führt jedoch zu einer Wirksamkeitsminderung der Phosphate für flammwidrige Einstellungen, da der Phoshorgehalt abnimmt. Zur Wiederherstellung der flammwidrigen Eigenschaften müssen daher größere Mengen an Phosphoradditiven eingesetzt werden, die z.B. die Vicattemperatur in unerwünschter Weise herabsetzen.

Bekannt ist auch, Polycarbonatformmassen durch Polyphosphate flammwidrig auszurüsten. (Siehe US-Patente 4 463 130 (Le A 21 835) und 4 481 338 (Le A 21 841)).

Derartige Formmassen haben jedoch den Nachteil, daß sie, da sie mit polymeren Phosphaten versetzt sind, nicht das gewünschte hohe Maß an Fließfähigkeit erreichen.

Überraschend wurde gefunden, daß bei Verwendung der erfindungsgemäßen Phosphorsäureester der Formel (I), von z.B. Benzylphenol, 4-Phenylphenol, 1-Phenylethyl-phenol und 1-Methyl-1-phenylethyl-phenol, die gute Werte der Eigenschaften wie Schlagzähigkeit, Oberflächenbeschaffenheit und ein hoher Grad von Flammwidrigkeit erreicht werden, die Wärmeformbeständigkeit (gemessen als Vicat B) aber verbessert und die Neigung zum Verdampfen der Phosphorsäureester bei der Verarbeitung der Formmassen sowie die Migration bei Lagerung besonders in der Wärme entscheidend zurückgedrängt werden.

Eine Gruppe der Verbindungen der Formel (I), nämlich Phosphate vom 4-Phenyl phenol ist als Flammschutzmittel bislang für PPO-Harzmassen (siehe US-PS 4 683 255) beschrieben, die gegebenenfalls Polystyrol-Harze enthalten können.

Die erfindungsgemäß geeigneten Polycarbonate gemäß Komponente A) können sowohl Homopolycarbonate als auch Copolycarbonate aus den Diphenolen der Formel (IV) sein. 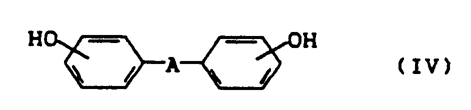
Darüber hinaus können die Polycarbonate der Komponente A) insbesondere auch Copolycarbonate aus den Diphenolen (IV) und (IVa) sein. 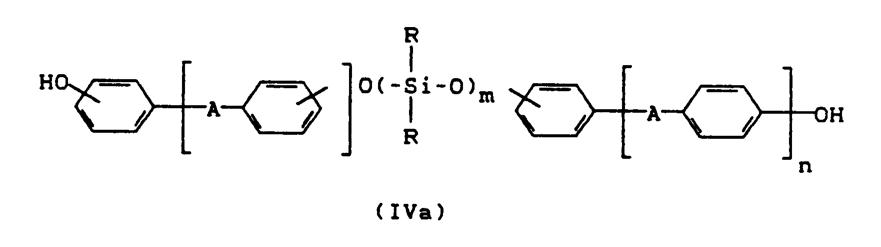
worin
A eine Einfachbindung, C₁-C₅-Alkylen, ein C₂-C₅-Alkyliden, ein C₅-C₆-Cycloalkyliden, -O-, -S- oder -SO₂-, die aromatischen Bereiche durch Methylgruppen oder Halogenatome substituiert sein können, n = 1 oder null ist, die R's gleich oder verschieden sind und ein lineares C₁-C₂₀-Alkyl, verzweigtes C₃-C₂₀-Alkyl oder C₆-C₂₀-Aryl, vorzugsweise CH₃, sind und m eine Zahl zwischen 5 und 100, vorzugsweise zwischen 20 und 80 ist, und wobei der Gewichtsanteil an Diphenolen der Formel (IVa) in den Copolycarbonaten jeweils so bemessen ist, daß der Gehalt an Diorganosiloxy-Einheiten (V) 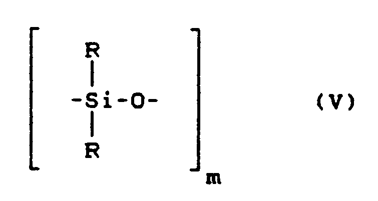
in Polycarbonat A) zwischen 1 und 25 Gew.-%, vorzugsweise zwischen 2,5 und 25 Gew.-%, beträgt.

Die Polycarbonate gemäß Komponente A) können sowohl linear als auch verzweigt sein, sie können aromatisch gebundenes Halogen, vorzugsweise Brom und/oder Chlor enthalten, sie können aber auch frei von aromatisch gebundenem Halogen also halogenfrei sein.

Die Polycarbonate der Komponente A) können sowohl einzeln als auch im Gemisch eingesetzt werden. In den Fällen, in denen die Komponente A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 25 Gew.-% enthalten, sofern durch die Abmischung mit den siloxanfreien Polycarbonaten der Gehalt an Polycarbonatgemisch wiederum zwischen 1 und 25 Gew.-% liegt.

Die Diphenole der Formel (IV) sind entweder literaturbekannt oder nach literaturbekannten Verfahren herstellbar; Polydiorganosiloxane mit Hydroxyaryloxy-Endgruppen gemäß Formel (IVa) sind ebenfalls bekannt (siehe z.B. US-Patent 3 419 634) bzw. nach literaturbekannten Verfahren herstellbar .

Die Herstellung der erfindungsgemäß geeigneten Polycarbonate gemäß Komponente A) ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltiger Polycarbonate siehe z.B. DE-OS 3 334 782).

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß deutscher Offenlegungsschrift Nr. 35 06 472, wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (IV) und (IVa).

Die erfindungsgemäß geeigneten Polycarbonte gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Sie haben mittlere Gewichtsmittelmolekulargewichte (M̅_{w}, gemessen z.B. durch Ultrazentrifugation oder Streulichtmessung) von 10 000 bis 200 000, vorzugsweise von 20 000 bis 80 000.

Geeignete Diphenole der Formel (IV) sind z.B. Hydrochinon, Resorcin, 4,4′-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)propan, 2,2-Bis(4-hydroxy-3,5-dichlorphenyl)propan, 2,2-Bis-(4-hydroxy-3,5-dibromphenyl)-propan oder 1,1-Bis-(4-hydroxyphenyl)-cyclohexan.

Bevorzugte Diphenole der Formel (IV) sind 2,2-Bis-(4-hydroxyphenyl)propan und 1,1-Bis(4-hydroxy-phenyl)cyclohexan. Es können auch Mischungen von Diphenolen eingesetzt werden.

Geeignete Diphenole der Formel (IVa) sind solche, in denen R Methyl, Ethyl, Propyl, n-Butyl, tert.-Butyl und Phenyl ist. Es können auch Mischungen von Diphenolen der Formel (IVa) eingesetzt werden.

Bevorzugte Diphenole der Formel (IVa) sind die der Formel (IVb) 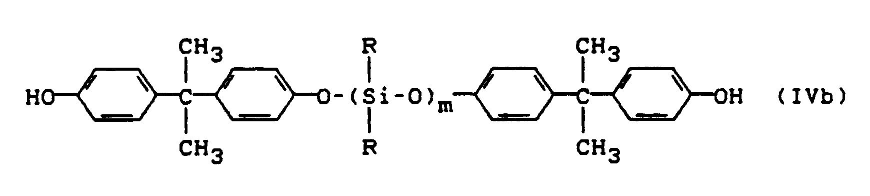
worin
die R's gleich sind und die vorstehend genannte Bedeutung haben, also Methyl etc. und Phenyl bedeuten und m wiederum eine ganze Zahl zwischen 5 und 100, vorzugsweise zwischen 20 und 80, ist.

Bevorzugte Polydiorganosiloxan-Polycarbonat-Blockcopolymere sind Copolycarbonate der Diphenole der Formel (IV) mit Diphenolen der Formel (IVb).

Erfindungsgemäß geeignete thermoplastische Copolymerisate gemäß Komponente B) sind harzartig, thermoplastisch und kautschukfrei. Besonders bevorzugte Polymerisate B) sind solche aus Styrol, α-Methylstyrol, kernalkyliertem Styrol, Halogenstyrol oder Mischungen daraus mit Acrylnitril, Methacrylnitril, Alkylacrylat, Alkylmethacrylat, Maleinsäureanhydrid, N-substituiertem Maleinimid, Vinylacetat oder Mischungen daraus. Unter kernsubstituierten Styrolen sind kernalkylierte Styrole, wie z.B. p-Methylstyrol, zu verstehen.

Besonders bevorzugte Gewichtsverhältnisse im thermoplastischen Polymerisat B) sind z.B. 60 bis 80 Gew.-% Styrol, α-Methylstyrol, kernsubstituiertes Styrol, Halogenstyrol oder Mischungen daraus und 20 bis 40 Gew.-% Acrylnitril.

Die Polymerisate gemäß Komponente B) sind bekannt und lassen sich durch radikalische Polymerisation, insbesondere durch Emulsions-, Suspensions-, Lösungs- oder Massepolymerisation, herstellen. Die Polymerisate gemäß Komponente B) besitzen vorzugsweise Molekulargewichte M̅_{w} (Gewichtsmittel, ermittelt durch Lichtstreuung oder Sedimentation) zwischen 15 000 und 200 000.

Zur Herstellung der Pfropfpolymerisate gemäß Komponente C) geeignete Kautschuke sind insbesondere Polybutadiene, Polychloroprene, Polyisoprene, Styrol-Butadiencopolymerkautschuke, Acrylnitril-Butadien-Copolymerkautschuke mit Gelgehalten (gemessen bei 20°C) größer als 30 Gew.-% Alkylacrylatkautschuke, EPDM (Ethylen-Propylen-Dien-Monomer)-Kautschuke und Siliconkautschuke.

Geeignete Butadien-Styrol-Copolymerkautschuke können bis zu 30 Gew.-%, bezogen auf Kautschukgewicht, eines niederen Alkylesters von Acryl- oder Methacrylsäure (beispeilsweise Methylmethacrylat, Ethylacrylat, Methylacrylat) enthalten.

Geeignete Alkylacrylatkautschuke sind solche auf Basis von C₁-C₈-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, kernalkyliertes Styrol, Halogenstyrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkende ethylenisch ungesättigte Monomere enthalten. Solche Vernetzer sind z.B. Alkylendioldi(meth)-acrylate, Polyesterdi-(meth)-acrylat, Divinylbenzol, Trivinylbenzol, Triallylcyanurat, Allyl(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Die erfindungsgemäß geeigneten Silikonkautschuke enthalten in dispergierter Form wenigstens teilvernetzte, teilchenförmige Silikonkautschuke mit im wesentlichen chemisch eingebauten Gruppen der allgemeinen Formeln
a) R₂SiO_{2/2}, RSiO_{3/2}, R₂R³SiO_{1/2}, SiO_{4/2} und gegebenenfalls Gruppen der Formel
b) R¹CH=CH-(R²)-, gegebenenfalls in Kombination mit SH-Gruppen
wobei
- R =: einwertiger, gesättigter Kohlenwasserstoffrest, insbesondere -CH₃, -C₆H₅, gegebenenfalls durch -SH, Halogen, -C₁-C₆-Oxalkyl substituiert,
- R¹ =: H, C₁-C₆-Alkyl, insbesondere H, CH₃,
- R² =: Einfachbindung, C₁-C₄-Alkylen, insbesondere -CH₂-, -C₂H₄- und
- R³ =: R oder OH
ist.

Die Mengen der einzelnen Siloxaneinheiten sind dabei so bemessen, daß auf 100 Mol-Einheiten der Formel R₂SiO_{2/2} 0 bis 0,5 Mol-Einheiten R₂R³SiO_{1/2}, 0 bis 10 Mol Einheiten der Formel RSiO_{3/2} und 0 bis 3 Mol-Einheiten der Formel SiO_{4/2} vorhanden sind.

In bevorzugten Silikonkautschuken sind mindestens 80 % aller Reste R CH₃-Gruppen.

Im Falle der Gruppe R₂R³SiO_{1/2} ist des weiteren möglich, daß einer der drei Reste R eine Hydroxylgruppe darstellt. Besonders bevorzugte Endgruppe ist die Dimethylhydroxysiloxyeinheit.

Die Silikonkautschuke enthalten die Gruppen b) in Mengen von 2 bis 10 Mol-%, bezogen auf die Gesamtheit aller Reste R.

Bevorzugte Kautschuke zur Herstellung der Propfpolymerisate C) sind Dien-, Alkylacrylat- und Silikonkautschuke.

Die Kautschuke liegen in den Pfropfpolymerisaten C) in Form wenigstens partiell vernetzter Teilchen einer mittleren Teilchengröße von 0,1 bis 3,0 µm, insbesondere 0,2 bis 0,6 µm vor. Sie sind wenigstens teilvernetzt, d.h. sie besitzen Gelgehalte von größer 20 Gew.-%, besonders größer 50 Gew.-%, besonders bevorzugt im Bereich von 73 bis 98 Gew.-%.

Die Pfropfpolymerisate C) werden durch radikalische Pfropfcopolymerisate der eingangs definierten Monomergemische aus C.1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-, Lösungs-, Masse-oder Suspensionspolymerisation. Besonders bevorzugte Pfropfpolymerisate C) sind die sogenannten ABS-Polymerisate.

Die erfindungsgemäß geeigneten Phosphorverbindungen gemäß Komponente D) sind generell nach bekannten Verfahren herstellbar (siehe beispielsweise Ullmann, Enzyklopädie der technischen Chemie, Bd. 18. S. 301 ff, 1979; Houben-Weyl, Methoden der Organischen Chemie, Bd. 12/1, S. 43; Beilstein, Bd. 6, S. 177).

Die aromatischen Bereiche der erfindungsgemäß geeigneten Phosphorverbindungen können Alkyl substituiert sein, wobei die Kohlenstoffkette bis zu etwa 4 Kohlenstoffatome enthalten kann.

Erfindungsgemäß geeignete Phosphorverbindungen gemäß Komponente D), Formel (I), sind beispielsweise, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-phenyl-bis-[(1-phenylethyl)-phenyl]-ester, Phosphorsäure-phenyl-bis-[(1-methyl-1-phenylethyl)-phenyl]-ester und Phosphorsäure-phenyl-bis-[4-(1-phenylethyl)-2,6-dimethylphenyl]-ester.

Speziell bevorzugt sind der, Phosphorsäure-phenyl-bis-[(1-phenylethyl)-phenyl]-ester und der Phosphorsäure-phenyl-bis-(benzylphenyl)-ester. Verwendet werden können die erfindungsgemäßen Phosphorsäureester auch in Mischung miteinander sowie in Mischung mit Polyphosphorsäureestern von Novolaken (US 4 105 825).

Die erfindungsgemäß geeigneten Tetrafluorethylenpolymerisate gemäß Komponente E) sind Polymere mit Fluorgehalten von 65-76 Gew.-%, vorzugsweise 70-76 Gew.-%. Beispiele sind u.a. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7-71 kg/cm² und bei Temperaturen von 0-200°C, vorzugsweise bei Temperaturen von 20-100°C (nähere Einzelheiten siehe beispielsweise US-Patent 2 393 967).

Die erfindungsgemäßen geeigneten Polytetrafluorethylene haben mittlere Teilchengrößen von 0,05 bis 20 µm, vorzugsweise 0,08 bis 10 µm und eine Dichte von 1,2-1,9 g/cm³ .

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus Granulaten oder Pulvern der Komponenten A) bis D) sowie einem Polytetrafluorethylen-Pulver mit üblicher Teilchengröße und Dichte her, so werden zwar Formmassen hoher Flammwidrigkeit erhalten; Formkörper daraus haben aber manchmal eine mangelhafte Oberfläche, beispielsweise Mikrorisse oder Schlieren.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate E) mit Emulsionen der Pfropfpolymerisate C) eingesetzt werden.

Zur Herstellung einer entsprechenden Mischung wird zuerst eine wäßrige Emulsion (Latex) eines Pfropfpolymerisates C) mit mittleren Latexteilchengrößen von 0,1 bis 2,0 µm, insbesondere 0,2 bis 0,6 µm, mit einer feinteiligen Emulsion eines Tetrafluorethylenpolymerisats in Wasser mit mittleren Teilchengrößen von 0,05 bis 20 µm, insbesondere von 0,08 bis 10 µm vermischt; geeignete Tetrafluorethylenpolymersat-Emulsionen besitzen üblicherweise Feststoffgehalte von 30 bis 70 Gew.-%, insbesondere von 50-60 Gew.-%. Die einzusetzenden Emulsionen der Pfropfpolymerisate C) besitzen Feststoffgehalte von 25 bis 60 Gew.-%, insbesondere von 30 bis 45 Gew.-%.

In der Emulsionsmischung liegt das Gewichtsverhältnis Pfropfpolymerisat C) zum Tetrafluorethylenpolymerisat E) zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C getrocknet werden.

Geeignete Tetrafluorethylenpolymerisat-Emulsionen sind handelsübliche Produkte und werden beispielsweise von der Firma DuPont als Teflon® 30N angeboten.

Da der Einsatz der erfindungsgemäß zu verwendenden Pfropfpolymerisate C) durch Vorabmischung ihrer Emulsionen mit Emulsionen der Komponenten E) erfolgt, ist die Herstellung der Komponente C) nach dem Verfahren der Emulsionspolymerisation am zweckmäßigsten.

Das eingesetzte Verhältnis von Polytetrafluorethylen E) und Pfropfpolymerisat C) ist so zu wählen, daß der Gesamtgehalt an E) in der Mischung aus A) + B) und C) zwischen 0,1 und 3,0 Gewichtsteilen liegt.

Die erfindungsgemäßen thermoplastischen Formmassen können weitere Thermoplasten wie Polyalkylencarbonsäureester, Polysulfone, Polyethersulfone, Polyphenylensulfide sowie weitere für die Komponenten A), B) und gegebenenfalls C) geeignete Zusätze wie Stabilisatoren, Pigmente, Fließmittel, Entformungsmittel, Antistatika und/oder andere Flammschutzmittel in üblichen Mengen enthalten.

Gegenstand der vorliegenden Erfindung sind somit auch Polycarbonatformmassen enthaltend die Komponenten A), B), D), E) und gegebenenfalls C), thermoplastische Polyalkylencarbonsäureester, thermoplastische Polysulfone, thermoplastische Polyethersulfone, thermoplastische Polyphenylensulfide, Stabilisatoren, Pigmente, Fließmittel, Entformungsmittel, Antistatika und/oder andere Flammschutzmittel.

Die erfindungsgemäßen thermoplastischen Formmassen enthaltend die Komponenten A); B), D), E) und gegebenenfalls C), thermoplastische Polyalkylencarbonsäureester, thermoplastische Polysulfone, thermoplastische Polyethersulfone, thermoplastische Polyphenylensulfide, Stabilisatoren, Pigmente, Fließmittel, Entformungsmittel, Antistatika, und/oder andere Flammschutzmittel werden hergestellt, indem man die jeweiligen der vorstehend genannten Bestandteile in bekannter Weise vermischt und bei Temperaturen von 200°C bis 330°C in üblichen Aggregaten wie Innenknetern, Extrudern oder Doppelwellenschnecken schmelzcompoundiert oder schmelzextrudiert, oder indem man die Lösungen der jeweiligen der vorstehend genannten Bestandteile in geeigneten organischen Lösungsmitteln, beispielsweise in Chlorbenzol, mischt und die Lösungsgemische in üblichen Aggregaten, beispielsweise in Eindampfextrudern, eindampft.

Die Vermischung der einzelnen Bestandteile kann in bekannter Weise sowohl sukzessiv als auch simultan erfolgen, und zwar sowohl bei etwa 20°C (Raumtemperatur) als auch bei höherer Temperatur.

Gegenstand der vorliegenden Erfindung ist somit auch ein Verfahren zur Herstellung von thermoplastischen Polycarbonatformmassen enthaltend die Komponenten A), B), D), E) und gegebenenfalls C), Polyalkylencarbonsäureester, Polysulfone, Polyethersulfone, Polyphenylensulfide, Stabilisatoren, Pigmente, Fließmittel, Entformungsmittel, Antistatika und/oder andere Flammschutzmittel, das dadurch gekennzeichnet ist, daß man die jeweiligen der vorstehend genannten Bestandteile in bekannter Weise vermischt und danach bei Temperaturen von 200°C bis 330°C in üblichen Aggregaten schmelzcompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser d₅₀, ermittelt durch Ultrazentrifugenmessungen nach W. Scholtan et al., Kolloid-Z. u. Z. Polymere 250 (1972), 782-796.

### Beispiel 1

### Herstellung von Phosphorsäure-phenyl-bis-(benzylphenyl)-ester

In einem mit Kapillare, Vigreux-Kolonne mit absteigendem Kühler und Thermometer versehenen 4 l-Kolben, der durch eine Pilzheizhaube beheizt wird, werden 652,6 g Triphenylphosphat (2 Mol) 737,0 g Benzylphenol (4 Mol, Isomerengemisch, und 9,5 g wasserfreies Magnesiumchlorid (0,1 Mol) auf 150°C erwärmt. Dann wird der Druck langsam auf 300 mbar zurückgenommen und auf 200°C erwärmt. Ein über die Kapillare eintretender Stickstoffstrom durchmischt den Kolbeninhalt. Nach ca. einer Stunde wird bei ca. 200°C der Druck weiter auf 40 mbar zurückgenommen und in ca. 3 Stunden der größte Teil des sich abspaltenden Phenols abdestilliert. Danach wird in drei weiteren Stunden bei auf ca. 240°C steigender Temperatur und bei auf 5 mbar abfallendem Druck das Reaktionsgemisch ausgeheizt.

Als Destillat liegen 387,3 g kristallisiertes Produkt mit der OH-Zahl 578 vor. Es enthält 375,5 g Phenol (4 Mol Phenol:376,5 g).

Der Rückstand im Kolben wird in Methylenchlorid aufgenommen und mit Wasser mehrmals gewaschen. Die Methylenchloridlösung wird dann getrocknet und eingeengt. Der harzige Rückstand beträgt 895,4 g, die einer Ausbeute von 88,6 % entsprechen. Die OH-Zahl beträgt 0, der Phosphorgehalt 6,0 % (theoretisch 6,1 %). Das Produkt liegt vorwiegend als Phosphorsäure-phenyl-bis-(benzylphenyl)-ester vor.

Statt Benzylphenol können z.B. auch 4-Phenylphenol, 1-Phenylethyl-phenol und 1-Methyl-1-phenylethyl -phenol eingesetzt werden.

Statt Benzylphenol können auch z.B., 1-Phenylethyl-phenol (Isomerengemisch) und 1 Methyl-1-phenylethylphenol (Isomerengemisch) eingesetzt werden.

In dynamischen TGA-Messungen (Aufheizrate 10°C/Min.) wurde ermittelt, daß bei 290°C die gesamte flüchtige Menge des obigen, erfindungsgemäßen Phosphats gegenüber Triphenylphosphat mit 100 % Gewichtsverlust ca. 5 Gew.-% beträgt.

### Beispiel 2

### Herstellung von Phosphorsäure-bis-phenyl-(benzylphenyl)-ester und Phosphorsäure-tris-(benzylphenyl)-ester.

Werden statt 4 Mol Benzylphenol 2 Mol oder 6 Mol Benzylphenol nach Beispiel 1 eingesetzt, so erhält man ein Phosphat überwiegend mit der Struktur von Phosphorsäure-bis-phenyl-(benzylphenyl)-ester sowie Phosphorsäure-tris-(benzylphenyl)-ester.

### Beispiel 3

Verwendete Materialien:
I. Aromatisches Polycarbonat aus 100 Gew.-% Bisphenol A mit relativer Viskosität, gemessen in Methylenchlorid bei 25°C, von 1,284 (0,5 Gew.-%ige Lösung).
II. Thermoplastisches Polymerisat aus Styrol und Acrylnitril mit einem Acrylnitrilgehalt von 29 Gew.-% und einem mittleren Molekulargewicht von 60 000.
III. ABS-Pfropfpolymerisate von 50 Gew.-Styrol-Acrylnitrilgemisch (im Verhältnis von 72:28) auf 50 Gew.-% teilchenförmigem Polybutadien eines mittleren Teilchendurchmessers (d₅₀) von 0,4 µm, erhalten durch Emulsionspolymerisation.
IV. 10,0 Gew.-% Polytetrafluorethylen enthaltendes Polymerisat nach III., dadurch hergestellt, daß das ABS-Pfropfpolymerisat als Latex und das Polytetrafluorethylen als Dispersion gemischt, koaguliert und als Cofällung gemeinsam aufgearbeitet werden.
V. Pentaerythrittetrastearat
VI. Triphenylphosphat
VII. Phosphorsäure-bis-phenyl-(benzylphenyl)-ester
VIII. Phosphorsäure-tris-(benzylphenyl)-ester
IX. Phosphorsäure-phenyl-bis-(benzylphenyl)-ester
X. Phosphorsäure-phenyl-bis-(4-phenylphenyl)-ester
XI. Phosphorsäure-phenyl-bis-[(1-phenylethyl)-phenyl]-ester
XII. Phosphorsäure-phenyl-bis-[(1-methyl-1-phenylethyl)-phenyl]-ester
XIII. Umsetzungsprodukte aus einem Novolak (aus p-Kresol) und aus Triphenylphosphat nach US 4 105 825

### Herstellung und Prüfung der Formmassen:

Auf einem Banbury-Innenkneter (Fa. Pomini-Farrel) vom Typ BR (1,2 l) oder Typ OOC (3 l) werden die Bestandteile I.-V. und jeweils einer der Bestandteile VI.-XII. bei 230-240°C in den in Tabelle 1 angegebenen Mengen (Angaben in Gewichtsteilen) gemischt und zu Granulat aufgearbeitet.

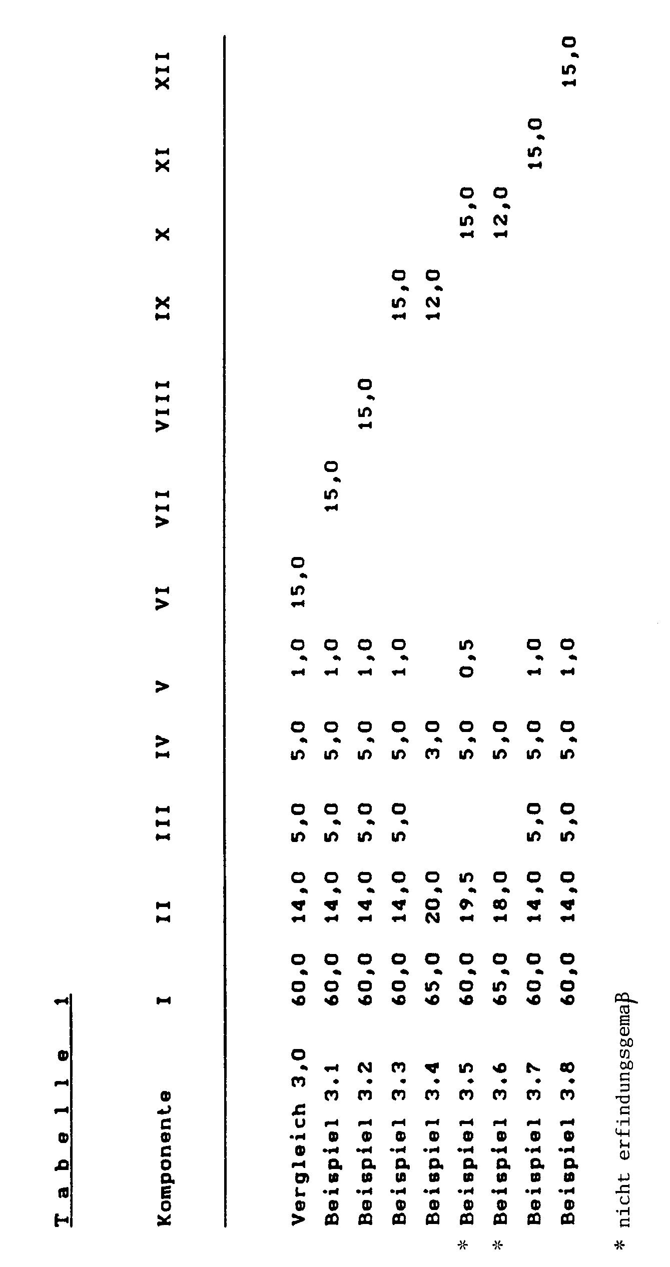

Die Formmassen werden bei 260°C zu Prüfkörpern spritzgegossen (Aggregat: Werner-Pfleiderer-Schnecke DKS 275, Schließkraft 275 MP, Schneckendurchmesser 56 mm, Länge L:D-23:1) und folgenden Tests unterzogen:
- Schlagzähigkeit nach DIN 43 543 (aₙ)
- Kerbschlagzähigkeit nach DIN 53 543 (aₖ)
- Wärmeformbeständigkeit nach DIN 53 460 (Vicat B)
- Brandtest nach Vorschrift Underwriter Laboratories (UL 94)
Tabelle 2 zeigt die erhaltenen Prüfdaten.

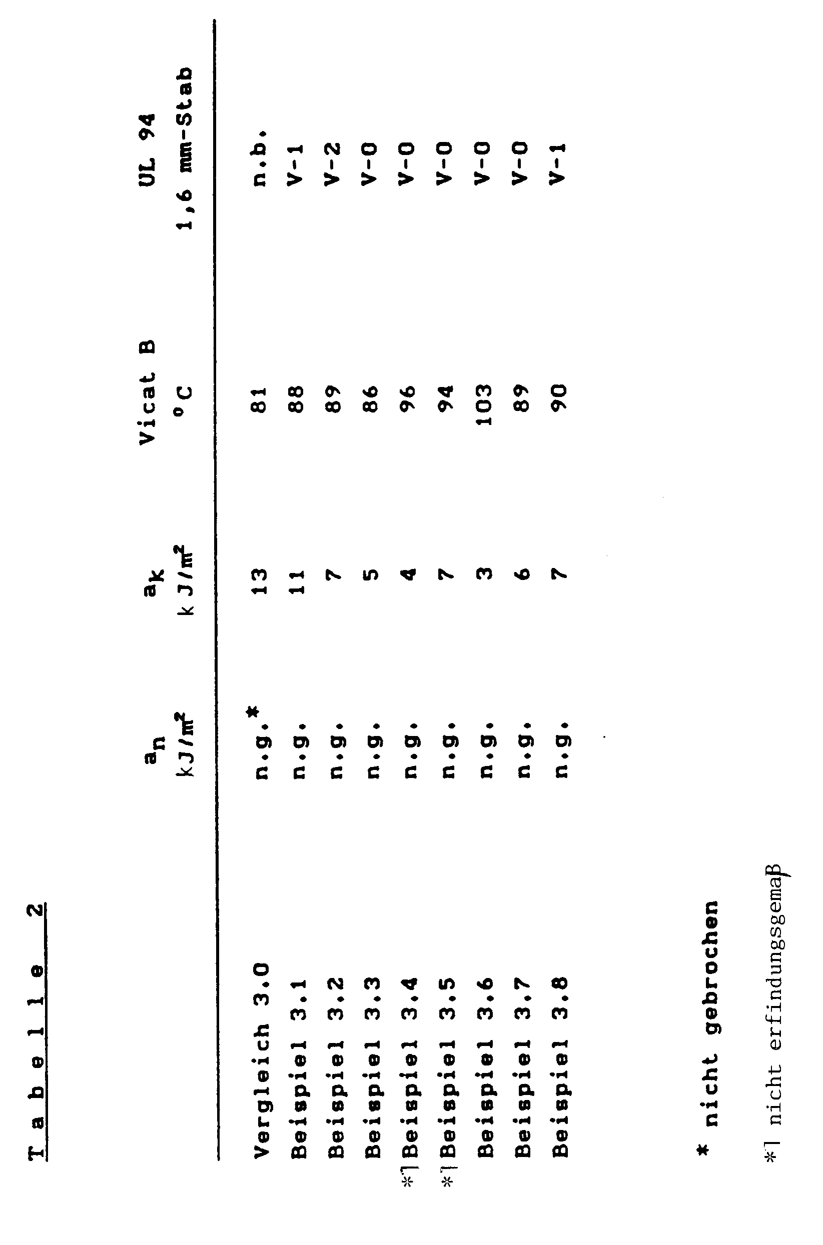

### Beispiel 4

Auf einem Innenkneter wie in Beispiel 3 werden die Bestandteile 1 bis VI, IX, X und XIII bei 230°C bis 240°C in den in Tabelle 3 angegebenen Mengen (Angaben in Gewichtsteilen) gemischt.

Daraufhin werden die Formmassen bei 260°C wie in Beispiel 3 zu Prüfkörpern spritzgegossen und den ebenfalls in Beispiel 3 angegebenen Tests unterzogen.

Tabelle 4 zeigt die erhaltenen Prüfdaten.

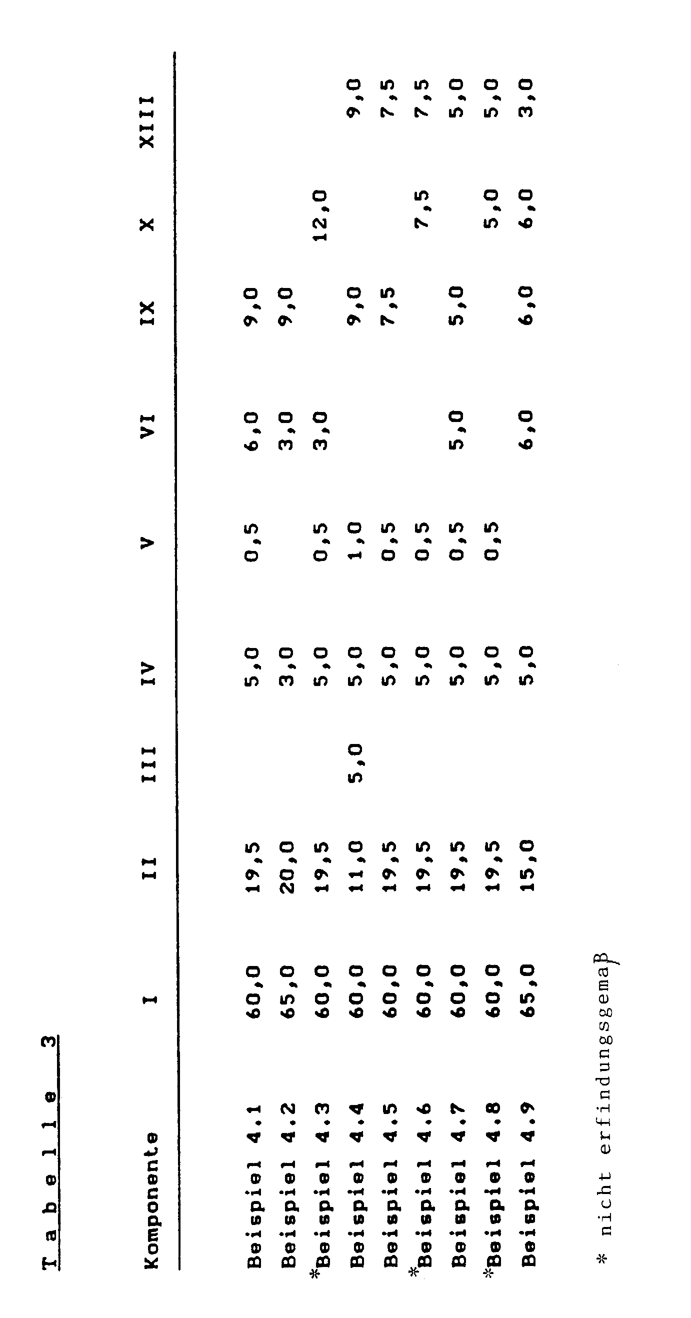

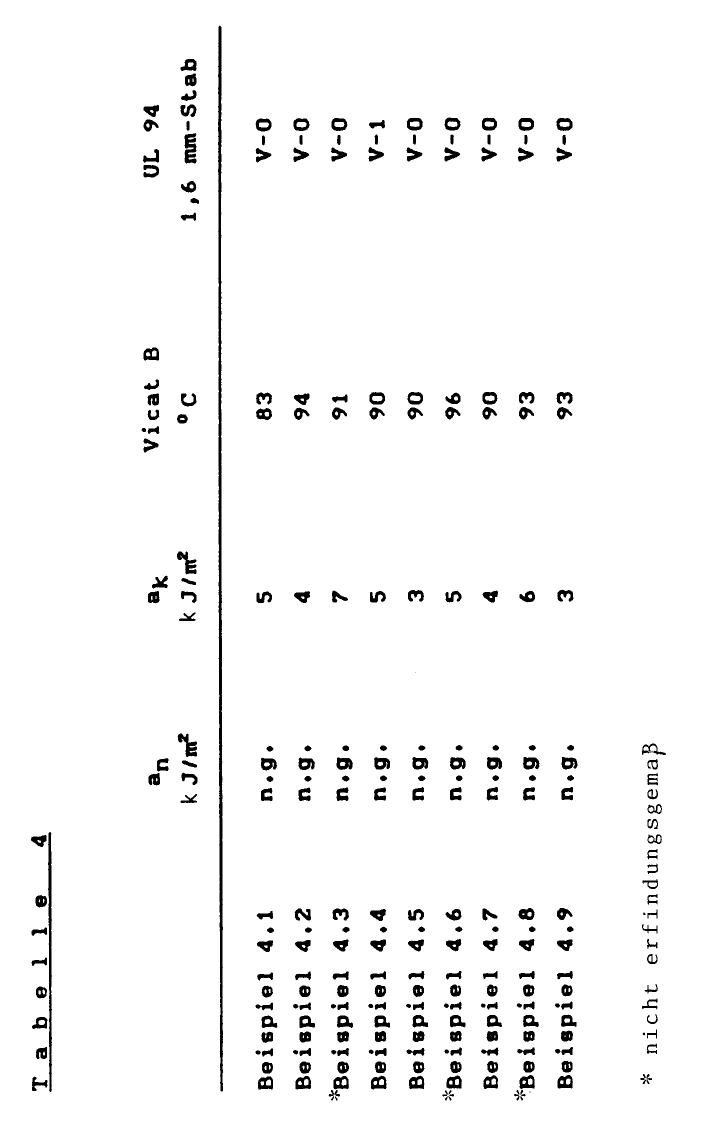

Aus den Tabellen 1-4 der Beispiele 3 und 4 geht hervor, daß die erfindungsgemäßen Phosphate allein, in Mischung mit Triphenylphosphat oder untereinander bzw. in Mischungen mit noch geringer flüchtigen Phosphaten Blends aus Polycarbonat und ABS-Komponenten in Gegenwart üblicher Mengen Polytetrafluorethylen einen Flammschutz geben, der die Beurteilung V-O bei 1,6 mm dicken Prüfkörpern nach UL 94 zukommt.

Die Wärmeformbeständigkeit liegt dabei in allen Fällen über der Probe, die mit Triphenylphosphat ausgerüstet ist. Dieser kommt mit 60 % Polycarbonat und 15 % Triphenylphosphat im Brandtest nach UL 94 nur ein "Nicht bestanden" zu. Den erfindungsgemäßen Phosphaten kommt eine deutlich geringere Flüchtigkeit als Triphenylphosphat zu.

## Patentansprüche

1. Thermoplastische Polycarbonatformmassen enthaltend
A) 40 bis 90 Gewichtsteile eines thermoplastischen, aromatischen Polycarbonats
B) 10-50 Gewichtsteile eines thermoplastischen Copolymerisats aus 50-95 Gew.-% Styrol, α-Methylstyrol, kernalkyliertem Styrol, Halogenstyrol oder Mischungen daraus und 5-50 Gew.-% Acrylnitril, Methacrylnitril, Alkylacrylat, Alkylmethacrylat, Maleinsäureanhydrid, N-substituiertem Maleinimid, Vinylacetat oder Mischungen daraus, gegebenenfalls
C) 0-25 Gewichtsteile Pfropfpolymerisat hergestellt aus
C.1) 5-90 Gewichtsteilen, einer Mischung aus:
C.1.1) 50-95 Gew.-% Styrol, α-Methylstyrol, Halogenstyrol, kernalkyliertem Styrol, Methylmethacrylat oder Mischungen daraus, und
C.1.2) 5-50 Gew.-% (Meth)Acrylnitril, Methylmethacrylat, Maleinsäureanhydrid, N-substiutiertem Maleinimid oder Mischungen daraus, auf
C.2) 10-95 Gewichtsteilen, eines Kautschuks mit einer Glastemperatur T_{G} ≦ 10°C,
D) 1 bis 25 Gew.-Teile, bezogen jeweils auf 100 Gew.-Teile der Gewichtssumme aus A)+B)+ gegebenenfalls C), einer Phosphorverbindung,
E) 0,05 bis 5,0 Gew.-Teile bezogen jeweils auf 100 Gew.-Teile der Gewichtssumme aus A)+B)+ gegebenenfalls C), eines Tetrafluorethylenpolymerisats mit mittleren Teilchengrößen von 0,05 bis 20 µm und einer Dichte von 1,2 bis 1,9 g/cm³,
dadurch gekennzeichnet, daß sie als Phosphorverbindungen D)
solche der Formel (I) enthalten, 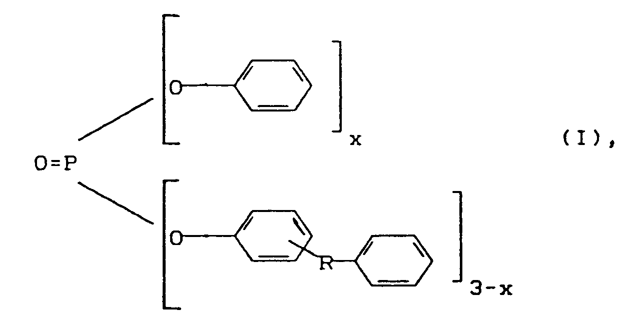 worin R eine -CH₂-, 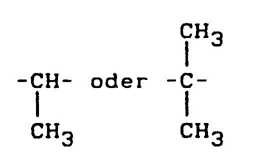 Gruppe ist,
x 0, 1 oder 2 ist und die aromatischen Bereiche auch Alkyl substituiert sein können.

2. Formmassen gemäß Anspruch 1, dadurch gekennzeichnet, daß die Komponente D) in Mengen von 2 bis 20 Gew.-Teilen vorliegt.

3. Thermoplastische Polycarbonatformmassen gemäß Anspruch 1, dadurch gekennzeichnet, daß die Komponente A) ein thermoplastisches Polycarbonat auf Basis der Diphenole der Formel (IV) 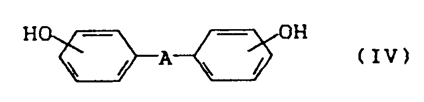 und gegebenenfalls der Formel (IVa) 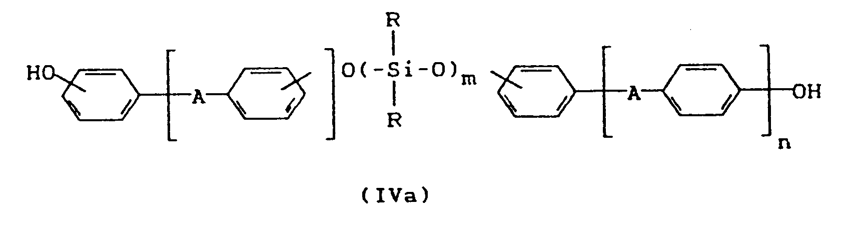 ist, worin
A eine Einfachbindung, C₁-C₅-Alkylen, ein C₂-C₅-Alkyliden, ein C₅-C₆-Cycloalkyliden, -O-, -S-oder -SO₂-, die aromatischen Bereiche durch Halogenatome substituiert sein können, n = 1 oder null ist, die R's gleich oder verschieden sind und ein lineares C₁-C₂₀-Alkyl, verzweigtes C₃-C₂₀-Alkyl oder C₆-C₂₀-Aryl, vorzugsweise CH₃, sind und m eine Zahl zwischen 5 und 100, vorzugsweise zwischen 20 und 80 ist, und wobei der Gewichtsanteil an Diphenolen der Formel (IVa) in den Copolycarbonaten jeweils so bemesen ist, daß der Gehalt an Diorganosiloxy-Einheiten (V) 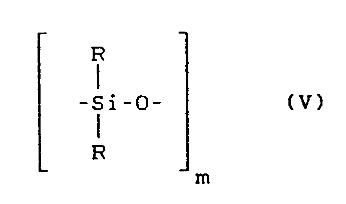
in Polycarbonat A) zwischen 1 und 25 Gew.-% beträgt.

4. Polycarbonatformmassen gemäß Anspruch 1, dadurch gekennzeichnet, daß die Komponente A) ein Gemisch aus siloxanhaltigen Polycarbonaten und siloxanfreien Polycarbonaten ist.

5. Formmassen gemäß Anspruch 1, dadurch gekennzeichnet, daß die Komponente E) in Mengen von 0,1 bis 1,0 Gew.-Teilen vorliegt.

6. Formmassen gemäß Anspruch 1, dadurch gekennzeichnet, daß die Komponente E) als koagulierte Mischung von Emulsionen der Tetrafluorethylenpolymerisate E) mit Emulsionen der Pfropfpolymerisate C) eingesetzt wird, worin das Gewichtsverhältnis Pfropfpolymerisat C) zum Tetrafluorethylenpolymerisat E) zwischen 95:5 und 60:40 liegt und der Gehalt an Cofällung von C) und E) bezogen auf 100 Gewichtsteile A), B) und gegebenenfalls C) zwischen 0,1 und 20,0 Gewichtsteilen liegt.

7. Formmassen gemäß Anspruch 1, dadurch gekennzeichnet, daß C) aus
C.1) 30 bis 80 Gewichtsteilen einer Mischung aus C.1.1) und C.1.2) und
C.2) 20 bis 70 Gewichtsteilen hergestellt ist.

8. Formmassen gemäß Anspruch 1, enthaltend zusätzlich thermoplastische Polyalkylencarbonsäureester, thermoplastische Polysulfone, thermoplastische Polyethersulfone, thermoplastische Polyphenylensulfide, Stabilisatoren, Pigmente, Fließmittel, Entformungsmittel, Antistatika und/oder andere Flammschutzmittel.

9. Verfahren zur Herstellung der Polycarbonatformmassen der Ansprüche 1 bis 8, dadurch gekennzeichnet, daß man die Komponenten A), B), D), E) und gegebenenfalls C), thermoplastische Polyalkylencarbonsäureester, thermoplastische Polysulfone, thermoplastische Polyethersulfone, thermoplastische Polyphenylensulfide, Stabilisatoren, Pigmente, Fließmittel, Entformungsmittel, Antistatika und/oder andere Flammschutzmittel in bekannter Weise vermischt und bei Temperaturen von 200°C bis 330°C in üblichen Aggregaten schmelzcompoundiert oder schmelzextrudiert, oder daß man Lösungen der jeweiligen der vorstehend genannten Bestandteile in geeigneten organischen Lösungsmitteln mischt und die Lösungsgemische in üblichen Aggregaten eindampft.

## Claims

1. Thermoplastic molding compounds containing
A) 40 to 90 parts by weight of a thermoplastic aromatic polycarbonate,
B) 10 to 50 parts by weight of a thermoplastic copolymer of 50 to 95% by weight styrene, α-methyl styrene, nucleus-alkylated styrene, halostyrene or mixtures thereof and 5 to 50% by weight acrylonitrile, methacrylonitrile, alkyl acrylate, alkyl methacrylate, maleic anhydride, N-substituted maleic imide, vinyl acetate or mixtures thereof,
C) 0 to 25 parts by weight of a graft polymer produced from
C.1) 5 to 90 parts by weight of a mixture of:
C.1.1) 50 to 95% by weight styrene, α-methyl styrene, halostyrene, nucleus-alkylated styrene, methyl methacrylate or mixtures thereof and
C.1.2) 5 to 50% by weight (meth)acrylontrile, methyl methacrylate, maleic anhydride, N-substituted maleic imide or mixtures thereof on
C.2) 10 to 95 parts by weight of a rubber having a glass temperature T_{G} of ≦ 10°C,
D) 1 to 25 parts by weight of a phosphorus compound, based on 100 parts by weight of the mixture of A) + B) and, optionally, C),
E) 0.05 to 5.0 parts by weight, based on 100 parts by weight A) + B) and, optionally, C) of a tetrafluoroethylene polymer having mean particle sizes of 0.05 to 20 µm and a density of 1.2 to 1.9 g/cm³,
characterized in that they contain as the phosphorus compounds D) those corresponding to formula (I): 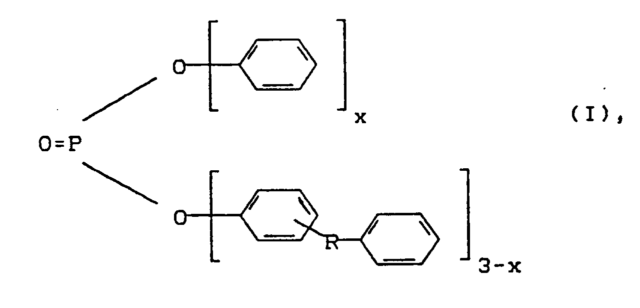 in which R is a -CH₂-, 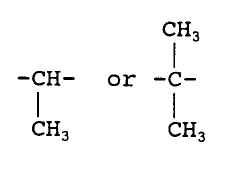 group and
x = 0, 1 or 2 and the aromatic parts may also be alkyl-substituted.

2. Molding compounds as claimed in claim 1, characterized in that component D) is present in quantities of from 2 to 20 parts by weight.

3. Thermoplastic polycarbonate molding compounds as claimed in claim 1, characterized in that component A) is a thermoplastic polycarbonate based on diphenols corresponding to formula (IV): 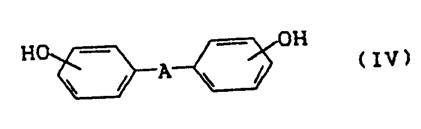 and, optionally, to formula (IVa): 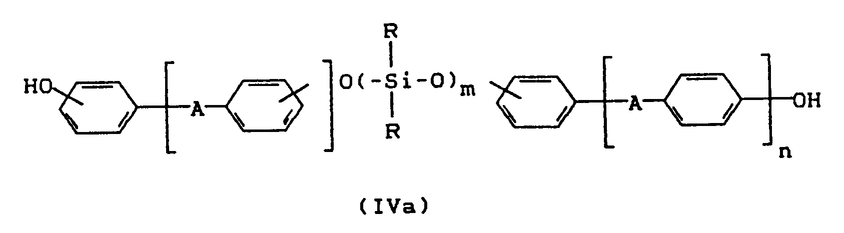 in which
A is a single bond, C₁₋₅ alkylene, a C₂₋₅ alkylidene, a C₅₋₆ cycloalkylidene, -O-, -S- or -SO₂-, the aromatic parts may be substituted by methyl groups or halogen atoms, n = 1 or 0, the R's may be the same or different and represent a linear C₁₋₂₀ alkyl, branched C₃₋₂₀ alkyl or C₆₋₂₀ aryl, preferably CH₃, and m is a number 5 to 100, preferably from 20 to 80, the quantity by weight of diphenols corresponding to formula (IVa) in the copolycarbonates being gauged in such a way that the content of diorganosiloxy units (V): 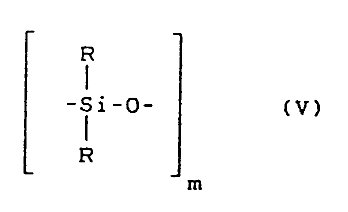 in polycarbonate A) is between 1 and 25% by weight and preferably between 2.5 and 25% by weight.

4. Polycarbonate molding compounds as claimed in claim 1, characterized in that component A) is a mixture of siloxane-containing polycarbonates and siloxane-free polycarbonates.

5. Molding compounds as claimed in claim 1, characterized in that component E) is present in quantities of from 0.1 to 1.0 parts by weight.

6. Molding compounds as claimed in claim 1, characterized in that component E) is used in the form of a coagulated mixture of emulsions of the tetrafluoroethylene polymers E) with emulsions of the graft polymers C), in which the ratio by weight of graft polymer C) to the tetrafluoroethylene polymer E) is from 95:5 to 60:40 and the content of coprecipitate of C) and E) is between 0.1 and 20.0 parts by weight to 100 parts by weight A), B) and, optionally, C).

7. Molding compounds as claimed in claim 1, characterized in that C) is prepared from
C.1) 30 to 80 parts by weight of a mixture of C.1.1) and C.1.2) and
C.2) 20 to 70 parts by weight.

8. Molding compounds as claimed in claim 1 additionally containing thermoplastic polyalkylene carboxylic acid esters, thermoplastic polysulfones, thermoplastic polyether sulfones, thermoplastic polyphylene sulfides, stabilizers, pigments, flow aids, mold release agents, antistatic agents and/or other flameproofing agents.

9. A process for the production of the polycarbonate molding compounds claimed in claims 1 to 8, characterized in that components A), B), D), E) and, optionally, C), thermoplastic polyalkylene carboxylic acid esters, thermoplastic polysulfones, thermoplastic polyether sulfones, thermoplastic polyphenylene sulfides, stabilizers, pigments, flow aids, mold release agents, antistatic agents and/or other flameproofing agents are mixed in known manner and the resulting mixture is melt-compounded or melt-extruded in standard units at temperatures in the range from 200 to 330°C or solutions of the particular constituents mentioned above in suitable organic solvents are mixed and the solution mixtures are concentrated by evaporation in standard units.

## Revendications

1. Compositions thermoplastiques à mouler à base de polycarbonate, contenant
A) 40 à 90 parties en poids d'un polycarbonate aromatique thermoplastique
B) 10 à 50 parties en poids d'un copolymère thermoplastique de 50 à 95 % en poids de styrène, d'α-méthylstyrène, de styrène alkylé sur le noyau, d'halogénostyrène ou de mélanges de ces monomères, et de 5 à 50 % en poids d'acrylonitrile, de méthacrylonitrile, d'acrylate d'alkyle, de méthacrylate d'alkyle, d'anhydride d'acide maléique, de maléimide substitué sur l'azote, d'acétate de vinyle ou de mélanges de ces monomères, le cas échéant
C) 0 à 25 parties en poids d'un polymère greffé préparé à partir
C.1) de 5 à 90 parties en poids d'un mélange constitué:
C.1.1) de 50 à 95 % en poids de styrène, d'α-méthylstyrène, d'halogénostyrène, de styrène alkylé sur le noyau, de méthacrylate de méthyle ou de mélanges de ces composés et
C.1.2) de 5 à 50 % en poids de (méth)acrylonitrile, de méthacrylate de méthyle, d'anhydride d'acide maléique, de maléimide substitué sur l'azote ou de mélanges de ces composés, sur
C.2) 10 à 95 parties en poids d'un caoutchouc de température T_{G} de transition vitreuse inférieure ou égale à 10°C,
D) 1 à 25 parties en poids, dans chaque cas par rapport à 100 parties en poids de la somme des poids de A)+B)+ le cas échéant C), d'un composé de phosphore,
E) 0,05 à 5,0 parties en poids, dans chaque cas pour 100 parties en poids de la somme des poids A)+B)+ le cas échéant C), d'un polymère de tétrafluoréthylène ayant des diamètres moyens de particules de 0,05 à 20 µm et une masse volumique de 1,2 à 1,9 g/cm³,
caractérisées en ce qu'elles contiennent comme composés de phosphore D)
des composés de formule (I) 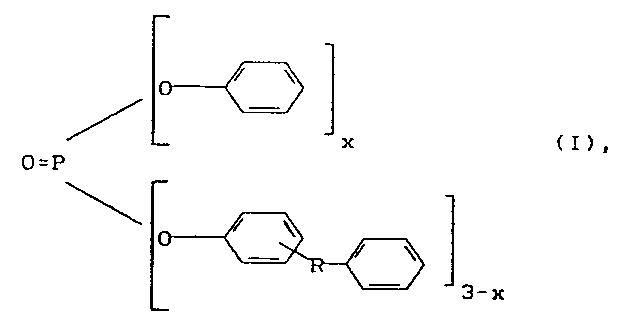 dans laquelle R représente un groupe -CH₂-, 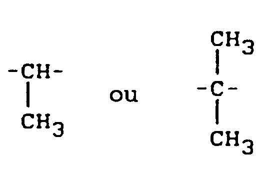
x a la valeur 0, 1 ou 2 et les parties aromatiques peuvent aussi être substituées par des groupes alkyle.

2. Compositions à mouler suivant la revendication 1, caractérisées en ce que le composant D) est présent en quantités de 2 à 20 parties en poids.

3. Compositions à mouler thermoplastiques à base de polycarbonate suivant la revendication 1, caractérisées en ce que le composant A) est un polycarbonate thermoplastique à base des diphénols de formule (IV) 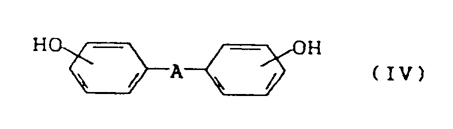 et le cas échéant de formule (IVa) 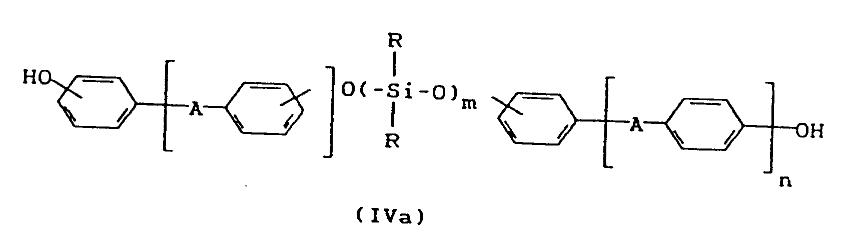 où
A représente une liaison simple, un groupe alkylène en C₁ à C₅, un groupe alkylidène en C₂ à C₅, un groupe cycloalkylidène en C₅ ou C₆, -O-, -S- ou -SO₂-, les parties aromatiques peuvent être substituées par des atomes d'halogènes, n est égal à 1 ou à zéro, les groupes R sont identiques ou différents et représentent un groupe alkyle en C₁ à C₂₀ linéaire, un groupe alkyle en C₃ à C₂₀ ramifié ou un groupe aryle en C₆ à C₂₀, de préférence CH₃, et m est un nombre de valeur comprise entre 5 et 100, de préférence entre 20 et 80, et la proportion en poids de diphénols de formule (IVa) dans les copolycarbonates est calculée dans chaque cas de manière que la teneur en motifs diorganosiloxy (V) 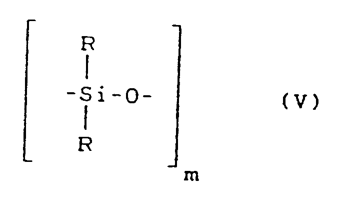
dans le polycarbonate A) se situe entre 1 et 25 % en poids.

4. Compositions à mouler à base de polycarbonate suivant la revendication 1, caractérisées en ce que le composant A) est un mélange de polycarbonates contenant un siloxane et de polycarbonates dépourvus de siloxane.

5. Compositions à mouler suivant la revendication 1, caractérisées en ce que le composant E) est présent en quantités de 0,1 à 1,0 partie en poids.

6. Compositions à mouler suivant la revendication 1, caractérisées en ce que le composant E) est utilisé sous forme d'un mélange coagulé d'émulsions des polymères de tétrafluoréthylène E) avec des émulsions des polymères greffés C), le rapport en poids du polymère greffé C) au polymère de tétrafluoréthylène E) se situant entre 95:5 et 60:40 et la teneur en produit de coprécipitation de C) et E), pour 100 parties en poids de A), B) et le cas échéant C), se situant entre 0,1 et 20,0 parties en poids.

7. Compositions à mouler suivant la revendication 1, caractérisées en ce que le composant C) est constitué de
C.1) 30 à 80 parties en poids d'un mélange de C.1.1) et de C.1.2), et
C.2) 20 à 70 parties en poids.

8. Compositions à mouler suivant la revendication 1, contenant en outre des esters thermoplastiques d'acides polyalkylènecarboxyliques, des polysulfones thermoplastiques, des polyéthersulfones thermoplastiques, des polyphénylènesulfures thermoplastiques, des agents stabilisants, des pigments, des agents d'écoulement, des agents de démoulage, des agents anti-statiques et/ou d'autres agents retardateurs de flamme.

9. Procédé de production de compositions à mouler à base de polycarbonate, suivant les revendications 1 à 8, caractérisé en ce qu'on mélange d'une manière connue les composants A), B), D, E) et le cas échéant C), des esters thermoplastiques d'acides polyalkylènecarboxyliques, des polysulfones thermoplastiques, des polyéthersulfones thermoplastiques, des polyphénylènesulfures thermoplastiques, des agents stabilisants, des pigments, des agents d'écoulement, des agents de démoulage, des agents anti-statiques et/ou d'autres agents retardateurs de flamme et on formule ou on extrude le mélange à l'état fondu à des températures de 200°C à 330°C dans des appareils classiques, ou bien on mélange des solutions de chacun des constituants mentionnés ci-dessus dans des solvants organiques appropriés et on évapore les mélanges de solutions dans des appareils classiques.
